# EUROPEAN PATENT APPLICATION

(11) **EP 2 779 681 A2**
(43) Date of publication of application: **17.09.2014**
(21) Application number: 13178863.0
(22) Date of filing: 01.08.2013
(51) Int. Cl.: H04N 21/482, H04N 21/414, H04N 21/4788, H04N 7/14

(54) **Unified interactive video kiosk for information management and method for the same**

(30) Priority: 13.03.2013 US 201361779322 P; 28.06.2013 US 201313931084; 03.07.2013 EP 13174889
(71) Applicant: New Technologies Ltd., St. Petersburg 194044 (RU)
(72) Inventor: Alekhin, Ivan, Moscow (RU)
(74) Representative: Zahn, Matthias

(57) **Abstract**

A standalone information access tool, such as bidirectional video terminal/kiosk (80) for receiving a variety of services and for information exchange is provided. The kiosk is connected to a plurality of remotely located representatives/operators (82) specializing in different services (83). The customer (79) is the user of the terminal (80) and receives help and share documents with at least one remote operator (82).

## Description

### FIELD OF INVENTION

This invention relates broadly to the field of video-communication wherein an interactive network teleconferencing system is provided enabling one or more parties at one location to be in effective collaboration with a dedicated operator or one or more parties at another location.

More specifically, the invention is related to a public or private standalone information access tool, such as bidirectional video terminal (or kiosk) for information exchange. The kiosk includes a touch-screen display and can be used for information entering, representation, and a real-time collaboration. It can also be used in video teleconferencing, business operations/transactions, submitting Government-required documents as well as in variety of other applications. It includes a monitor-like interface having touch-screen controls and selectable features that are displayed at the screen along with information that specified by a particular application of the device.

The proposed invention is especially useful for rural territories where the local infrastructure does not have enough institutions, so such kiosk brings services available in a large city to a small village.

The iQube software used in the disclosed video terminal is Copyright registered in the U.S. Library of Congress, the Certificate of Registration No. TX 7-685-192, the effective date of registration is February 20, 2013.

### BACKGROUND OF THE INVENTION

Standalone video terminals have been popular for many years and these terminals continue to change as technology improves. The capabilities of such devices expand as the cost of the computer components and memory decreases. A significant advance was made by adopting touch-screens as both an input device and an output display. Various applications are provided on the device, including teleconferencing, email, telephone, calendar, to mention a few.

Although the field of video-communication has been under development for a while, a number of processes, procedures and interactive communications systems have certain disadvantages that become apparent when used in a wide variety of complex and ever-changing commercial environments.

Traditionally, interactive network teleconferencing systems (kiosks or video terminals) are incorporated into a wall structure, e.g., the exterior wall of a bank, and the public had access only to a front panel of the automatic machine. Standalone video terminals have usually been of a box-shape, generally, rectangular but the corners have been smoothed or a gentle curved transition introduced to improve the box-like appearance thereof. A computer control module is provided as well.

Typically, video terminals or kiosks include an opening access door to let a service technician access the control module of the terminal. In addition, a transaction module (for example, for financial transactions) can be provided. The transaction module can include a card reader to provide a credit card or smart card capabilities, typically also requiring a communication capability for the terminal.

Certain embodiments of such a kiosk may provide a specific customer with a plurality of various services and information.

There is a need for a more versatile and unified kiosk system having the capability of providing users with a wider variety of services and information. Existing kiosks and terminals have limited capabilities over the growing requirements for ever-growing number of potentially available services.

Furthermore, the present invention provides a modern appearance that reflects a significant technological advancement.

### SUMMARY OF THE INVENTION

An interactive multimedia system is disclosed. The networking system includes at least one kiosk connected to a plurality of remotely located representatives/operators located at different places. Such kiosk provides a public customer with various information and multiple services and includes at least a keyboard, a touch screen, a camera, a microphone and a credit card reader. The customer is able to select particular services using the touch screen. Upon selection, customer is provided with help options and a set of instructions and service-relevant documents that can be downloaded using a network connection. The kiosk can also send and receive emails or SMS messages, as well as provide signing, identification and/or gesture recognition means (or gesture control means) to the customer. Moreover, the kiosk can provide means for the remote storage of the data that is related to a particular customer and protected by a password. The kiosk can also provide means for an emergency response, when needed.

Activating a help option establishes a connection between the kiosk and a corresponding operator's station from the plurality of operators. The operator's station includes an operator, a computer, a camera, a microphone and an interface allowing control of customer's access to the kiosk. The operator performs the service which is relevant to the customer's selection and the image from the operator's camera is transmitted to the kiosk's screen. Meanwhile, the kiosk's camera provides the first operator with an image of the customer and the network provides a secure communication between the kiosk and the operator's stations involved into the communication. Thus, the customer has an illusion that he/she is present in a facility associated with this kind of service, for example, an investment professional, or a tax lawyer, or other service, which is not available in his rural area.

Upon completing the documents required for the first selected service, the operator is capable of seeing a progress via the operator's interface. Moreover, the operator is able to provide vocal instructions to the customer or complete the documents her-/himself, accordingly to the customer's instructions by sharing the document on the kiosk's screen and the operator's screen.

The customer can select a next service from the list; activate a second help option, thus engaging another operator, who is specifically relevant to the next service chosen. In general, the operators can be located at different places. By these means, the system allows the customer to complete a multitude of operations using a multitude of remote specialized operators. The operators can be engaged, for example, in general assistance, sale, tickets reservation, ticket booking or information providing. The list of pre-selected products and/or services can also be provided for a customer, thus enabling the customer to select a particular provider based on a certain criterion, such as cost, distance from the customer, etc. The services may include ones provided by the governmental offices, also operating at the times when such offices are closed for the general public.

The disclosed system can further provide a connection between different operators, such as an option to connect the customer to the second operator by the first operator. In such situation, the images of the first and a second operator are displayed on the kiosk's screen and the customer performs teleconference with a few operators at the same time, optionally sharing the same documents between operators and the customer.

The kiosk can also provide WiFi area, which allows other customers to receive full service available at the kiosk via WiFi connection. In the following description, the term "WiFi" is used as a synonym for WLAN (or wireless local area network). In other words, the kiosk can comprise a WiFi transceiver; and a further customer can receive further services from the kiosk via a WiFi connection.

### BRIEF DESCRIPTION OF THE DRAWINGS

FIG. 1 illustrates a device being a standalone video terminal/ kiosk with perspective views being FIG. 1A and FIG. 1B a front view, FIG. 1C a back view, FIG. 1D a side view and FIG. 1E a view from the top.

FIG. 2 illustrates a block diagram for an example of the interactive kiosk system based on a single standalone video terminal/ kiosk and plurality of operators.

FIG. 3 illustrates an example of the interactive kiosk's front panel touch screen view with a plurality of optional interfaces offered to the customer.

FIG. 4 illustrates an example of the interactive kiosk's front panel touch screen view with an optional document that can be offered to the customer depending on the services selected and be shared with an operator in a real time.

FIG. 5 illustrates an example of the interactive kiosk's front panel touch screen view with a plurality of optional documents that can be offered to the customer depending on the services selected and be shared with multiple operators in a real time.

FIG 6 is a block diagram for a general example of the interactive kiosk system based on the plurality of kiosks and plurality of operators.

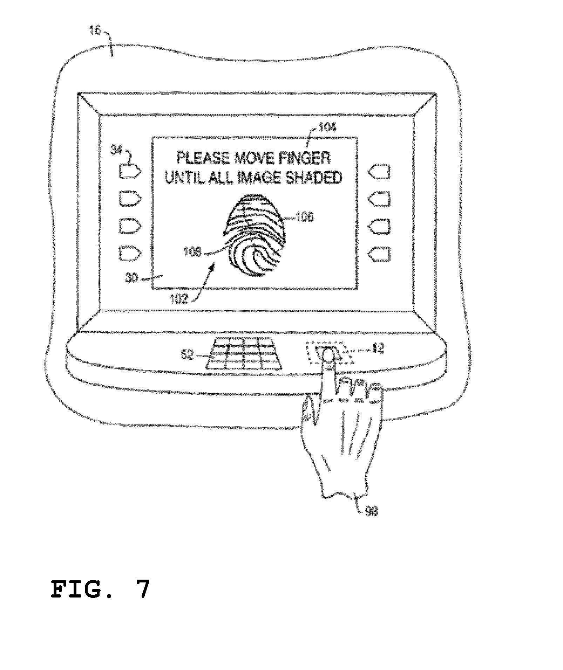

FIG. 7 illustrates an optional embodiment with biometric identification.

FIG. 8 illustrates a flow chart diagram of a method.

### DETAILED DESCRIPTION OF THE INVENTION

According to embodiments, and interactive system and a method are provided for a location-distributed plurality of kiosks (in a public places, service targeted locations, etc.) to serve a plurality of customers (hereinafter a "Customers' Pool") at different locations of the kiosks (i.e. the Kiosk's Pool).

A wide variety of tasks and services (hereinafter Tasks) is provided to a plurality of customers (i.e. Customers' Pool). The tasks can be administered separately and remotely by a plurality of unique distributed operators (i.e. the Operators' Pool). The Tasks and services may further include the following features.

One of the preferred applications of the disclosed invention is in multiple video teleconferencing. Yet another preferred application is customer remote video assistance, consulting and advisory.

A videoconferencing capability enables operator of providing a virtual face-to-face assistance to the customer. Moreover, certain embodiments of the kiosk provide a specially adapted interface allowing the customer to interact with an operator. Moreover, a various number of additional (also third-party) services, are included into the kiosk capabilities, for example: ticket reservation, various payment means and databases access, etc.

Communication between video terminals constitutes the video teleconferencing. The video teleconference terminal is capable of entering handwritten characters and drawings, displayed by a touch-screen. A video scanner produces documents soft-copies with the characters and drawings entered and displayed. The documents can further be transmitted using built in terminal capabilities. Voices of participants (e.g. customer and operator) are received by a built-in microphone, while pictures and video of the participants are captured by the built-in camera. Still pictures of documents and small solid objects can also be captured by the camera.

During the conference, the operator may request information from the customer and vice versa, using the built-in capabilities and software applications available at the video terminals. The user of the terminal can hold a video conference not only with the dedicated operator, but with any other suitable facility, such as a properly equipped personal computer, tablet or cell-phone, for example.

Video terminals can be subject to substantial abuse and thus require a robust construction to reduce service requirements and provide in an appropriate product life.

The present invention provides an innovative approach towards standalone video terminals concept, including expended functionality and effective space utilization. In an embodiment of the invention, the modules of the terminal are partially overlapped, having more effective space utilization by the terminal. It also provides an effective protection of the various modules of the terminal while maintaining its functionality.

Moreover, the present invention offers a network tool connecting a plurality of unique parties, such as customers and operators, to provide a wide variety of services based on targeted task-based information. A unique software iQube provides connection between plurality of the kiosks and operators in various locations thus enabling customers to exercise a remote electronic communication with any number of remote operators if needed, depending on the task or service required.

Connected customers and operators can simultaneously process customer's task, for instance through a task-based image on the shared interface screen. A specific operator (or its combination) is capable to administer the service that being required by a specific customer using additional services (also third-party services), if needed. Both, customer and operator(s), are capable to remotely add, remove, or change the content and the services that are available at the kiosks. In embodiments of the invention, the operator (or combination of operators) may also remotely monitor customer' activity at the kiosk.

One or more operators may also be in a remote electronic communication with the kiosks and their customers, with each other, and with the third parties, if required, to monitor and administer the tasks of the customer.

The main features and operational capabilities are as follows (can be used in combination):
1) The option of placing a video call by a user of the invention (a customer) to the operator's (i.e. assistant) workplace (i.e. station);
2) The option of supporting on-hold calls when all available operators are busy;
3) Supporting a service queue of kept on-hold- customers; informing users of the operator status and availability;
4) The option of recording and overview of audio/video conversations, including graphical and text information being transferred by operator to user during the call;
5) The option of forwarding calls to another operator or group of operators;
6) The option of a real-time interactive communication between the operator and the customer based on a real-time information transferring between the customer and the operator, including audio communication, and/or images and texts transferring and sharing.

Yet another application of the invention includes:
7) A real-time collaboration on documents, such as a real-time automatic representation of the data filled by operator and customer, particularly documents collaboration the touch-screen of the invention;
8) Ability to request the customer to enter required data or fill any required document or form;
9) Providing customer with an option of entering the required information using a on-screen keyboard;
10) Real-time operator's desktop presentation to the customer using the video terminal screen, including operator's cursor position;
11) The option to share the completed documents by an e-mail, FTP, including the option for third-party information system integration;
12) The option to provide customer with an interface to enable specific software applications, such as loan calculator, calendar, etc.;
13) The option to evaluate the operator's performance by a customer;
14) The option to create customized individual scenarios, checklists and forms that can be used for customer service;
15) The option to send an SMS (short message service, text message) to the customer with a reference (e.g. link) to the audio / video dialogue;
16) The option of combining operators in groups by their qualifications;
17) The option to monitor the operators' current activity;
18) The option to review the performance statistics for a specific operator or a group of operators;
19) The customizing option for the video terminal GUI (graphical user interface);
20) The option for the customer's offline-forms filling (without video consultation);
21) The option for video identification, including biometrical identification;
22) The option for voice control;
23) The option for gesture recognition and control;
24) The option for document scanning;
25) The option for contactless payment processing, a payment card processing;
26) The option of using WiFi connection to the kiosk services.

A standalone kiosk or video terminal includes: the housing been defined as a vertically-oriented tower, the tower being a structural framework of the terminal; the tower integrating various cooperating modules of the terminal; the tower having a shape of a flattened, vertically extended box that is tilted back; the tower with a lateral width being mildly tapered (gradually decreased) towards the bottom and the top of the tower; the tower being made of a glossy material; the tower further comprising a front panel, a back panel, side edges, a top edge and a flat floor panel, i.e. base; the base having a flat rounded rectangular shape; the flat rounded shape with front and rear convex sides; the base made of the metal or panel of uncoated glass; chassis being mounted on the base having front and rear supporting elements; the supporting elements being separated laterally, also having vertically oriented grooves; a locking device being located at the back of the rear supporting elements. the tower being placed on the top of the base that being located on the flat floor; the tower having a space of 1-5 inches between the base and the tower bottom, the space going around the front panel, the back panel and the side edges; the tower further comprising a touch-screen input/output module with the a touch-screen being located at the front panel for displaying and entering information; the tower front panel being covered by a smooth cladding surface, slightly protruding beyond it; a swing door opening at the front panel of the tower, the tower back panel being covered by a smooth veneer cladding, slightly protruding beyond it; an air vent opening at the top of the back side panel of the tower.

In an embodiment of the invention, a disclosed kiosk/video terminal as claimed wherein a touch-screen input/output module connected with an audio output, wherein said audio output is an acoustic system with a speaker. The said audio output directs an output signal towards the user. There are supports for the grids at the sides of the back tower panel; the grids being used for the acoustic system speaker's support.

In an embodiment of the invention, there are vertically oriented hinges at the side edge of the tower; the tower further comprising the card-reader module (such as a payment receiving module) with horizontal slit, being located at the front panel, below the screen, alone the front panel vertical line of symmetry; the card-reader module having a decorative lighting unit framed with a bezel;

In an embodiment of the invention, the tower further comprises the scanner module. The presence of the scanner module is located directly below the card-reader module slit, the scanner module being symmetrical alone the front panel vertical line of symmetry; the scanner module being visually highlighted by a spotlight having a rectangular shape.

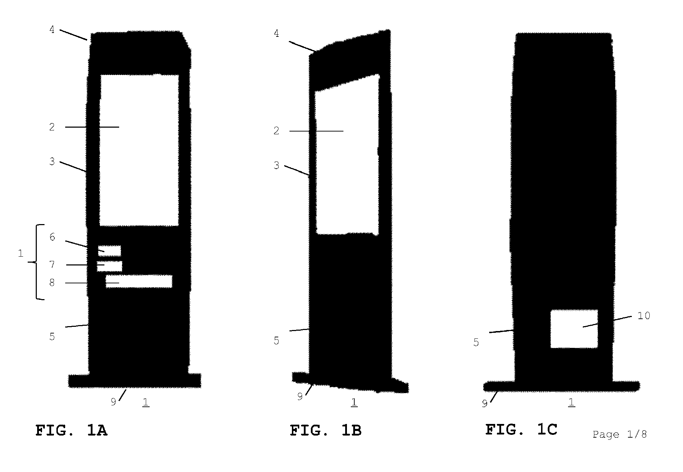

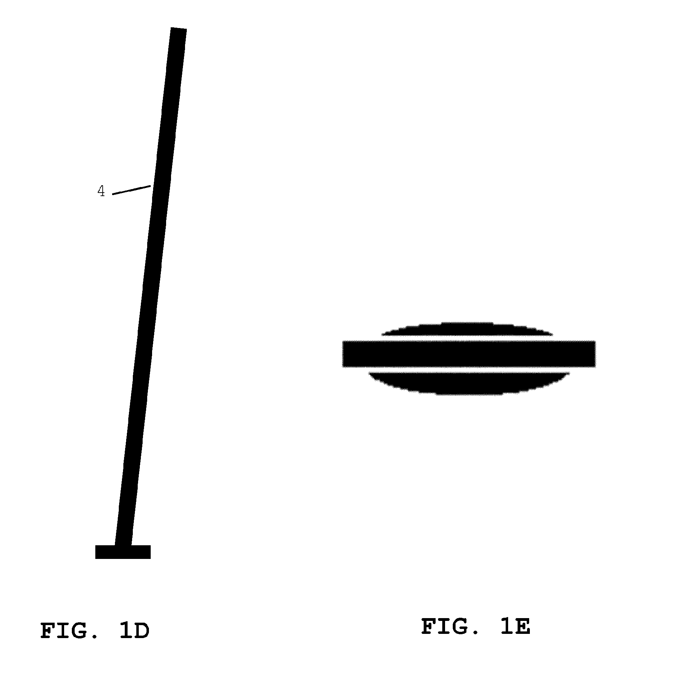

The disclosed device is shown in FIG. 1 where the 5 different perspective views are presented, namely, FIG. 1A and FIG. 1B is a front view, FIG. 1C is a back view, FIG. 1D is a side view and FIG. 1E is view from the top. The invention can be attached to computers, used as standalone devices or connected to a network. The invention allows the user to interact with the device directly and without any controlling equipment such a computer mouse, keyboard or a stylus. The principle of operation of the disclosed device is similar to touch-screen ATMs or cash registers. The tower includes and protects the computer module, the touch-screen module, acoustic module and other optional modules such as financial transaction module, card reader module, lighting module, scanner module, etc.

As shown in FIG. 1, a standalone video terminal/ kiosk 1, has a touch-screen 2 integrated into a front panel 3 of the tower 4, standing on the base 5. The front panel is covered with a smooth cladding surface. The terminal 1 includes a camera 6, card reader slot 7 and a scanning module 8. Conveniently, camera 6, card reader 7, scanning module and other user interface elements can be provided beneath the touch-screen 2 and above the base unit 5. This space is advantageously used to provide audio output. A tower support chassis 9 is attached to the base unit 5. An access panel 10 is located at the rear of the tower, which is removable by opening of the attached key lock.

The standalone kiosk /video terminal shown in FIG. 1 can also provide a video camera 6 for a communicating party. The camera 6 is configured to capture images and video (i.e., being a video capture device). Microphones or other audio capture devices can also be provided. The video and audio capture devices may include one or more switches for securely activating and deactivating the devices. The video and audio capture device may also be integrated into a single unit.

The standalone kiosk/ terminal shown in FIG. 1 includes data input and output means (not shown) to facilitate interaction and communication between the particular customer at the particular kiosk, and operator (or its combination), through the network. Input means may include, computer peripherals, for example, one or more touch-screens, buttons, keyboards, cameras, motion sensors, microphones, proximity sensors, switches, wireless antennas, card/magnetic strip readers, as well as video conferencing means.

Moreover, the standalone kiosk /video terminal shown in FIG. 1 with a disclosed structural framework not only provides an elegant design but supports operation in demanding environments such as crowded public facilities, museums, airports, etc. The modular, assessable design still allows effective service should any of the modules require service or replacement. The sound is transmitted into the gap (for example between touch-screen and camera) and to the front of the front panel (3). This position hides the speaker and reduces the probability of vandalism.

Furthermore, the standalone kiosk /video terminal shown in FIG. 1 can be used as a teleconference system and method in which an initiator of a teleconference (a customer) sends a request or instructions to the operator using the communication capability of the terminal. The video terminal can communicate with the intended operators or other participants using basic communication tools that are generally available.

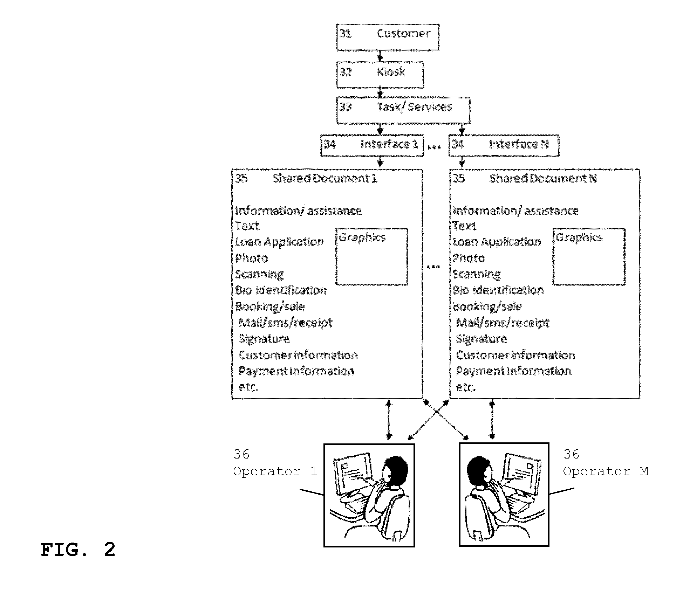

FIG. 2 shows an example of the interactive kiosk system based on a single standalone video terminal/ kiosk (as shown in FIG. 1) and a plurality of operators (Operators' Pool). With the reference to the FIG. 2, the system includes a kiosk 32 adapted to provide individual public customers 31 based on her/his location, with information and/or services provided by the unified set of interfaces 34 (Interfaces' Pool).

The customer 31 can use a single kiosk 32 based on the location (proximity) of the customer 31 and the kiosk 32. In other words, the customer uses a kiosk that is available in his/her proximity. In an embodiment of the invention, the operator 36 (or several operators) can be automatically (or manually) chosen based on the combination of the Tasks preferred by the particular customer 31 and supported by the interfaces 34. An interactive videoconferencing capability is provided through the kiosk 32 in such a manner that that a chosen operator 36 (or combination of the operators 36) can provide a virtual face-to-face assistance to a particular customer 31 at the particular customer location through the particular kiosk 32. The face-to-face assistance includes a sharing of the variety of the documents 35 depending on the tasks selection, including modification of the shared documents by all parties (at their respective screens) involved in the communication (i.e. a customer 31 and operator(s) 36) and providing a vocal instruction by such parties.

Kiosks 32 can be placed at any location, including but not limited to rural areas, shopping malls/centers, airports, hotels, hospitals, stores, sporting event locations, convention centers, businesses, restaurants, retail stores, banks, public transportation areas, schools, or mobile locations.

In an embodiment of the invention, the kiosk 32 provides a plurality of interfaces options 34 being adapted to allow the particular customer 31 to perform a particular Tasks of choice (or combination of such Tasks) and interact with the chosen operator 36 (or combination of operators 36) in a real time. In the example, the interface options 34 are illustrated by symbolic icon (or button), such as the symbol for a letter in the first row for a text processing application.

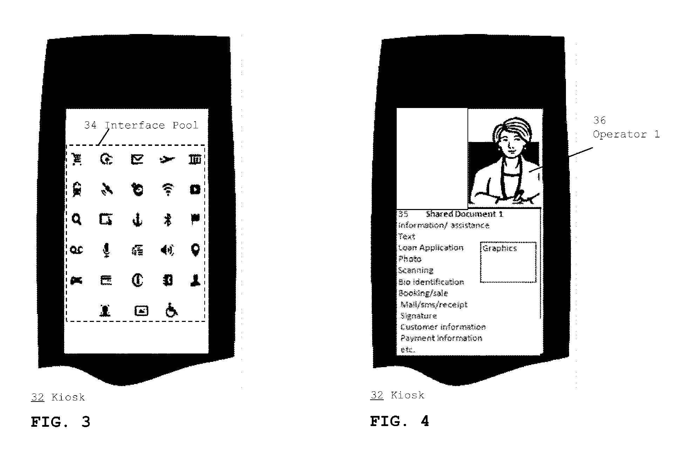

FIG. 3 shows a view example of the interactive kiosk's 32 front panel touch screen (as explained in FIG. 1) with a plurality of optional interfaces 34 (as explained in FIG. 2) offered to the customer.

The invention distributes data to all parties involved in the communication from which the parties can generate a display containing the common image, document, its modifications, and the video. FIG. 4 shows a view example of the interactive kiosk's 32 front panel touch screen (as explained in connection with FIG. 1) with a plurality of optional shared documents 35 (as explained in connection with FIG. 2) offered to the customer. The disclosed invention enables customer 31 and operator(s) 36 at different locations to collaborate on and to modify a shared document at their respective screens. The assistance and modification of the documents is provided by a real-time teleconferencing session with the operator 36. As shown schematically in FIG. 4, both operator 36 and a customer can share the chosen document at their respective screen. In other words, both the customer 31 and the operator 36 are users of separate computes who look at the same document that is available on both computer screens (of the kiosk and of the operator's computer).

With the reference to the FIG. 4, the operator 36 of the teleconference can send the visual and audio information through the network, and create notification messages/logs for the intended customer(s). Such information may include unique information associated with the customer 31. Teleconferencing may involve multiple customers/operators connected to the same communication channel, allowing customers to communicate (also to communicate with each other, intra-customer communication).

Any person/customer 31 located near the standalone kiosk/video terminal 32 can issue commands to any application program supported by the device, for example, hand-held calculator simulator, calendar, photo service, email, scanner, etc. For example, if the customer 31 presses the "Button" on the Calculator application on a touch-screen of the respective kiosk 32, then the Calculator application at the respective operator(s) 36 display would show the same "Button" in response. In other words, the Calculator program does not care which user pressed the buttons, nor whether some users pressed no buttons, provided a legal sequence of buttons (or allowable sequence) was received by the cooperative users. The same principle is applicable for any software application (from the Interfaces' Pool 34) supported by the invention.

Moreover, any customer 31 can draw on the user's respective local display, using typing, editing or drawing software tools applied to the touch-screen. The user can also erase or delete items on the display if necessary. Accordingly, the invention can replicate the customer's annotations on all other displays involved, so that all communicating parties (i.e. customer and operator) view similar results. Users can also take an action by using their respective cursors on the touch screen, and others party will see the movement, allowing remote pointing.

In general, the displays could be different for different users (e.g. customer 31 and the operator 36), but the basic content of all displays is the same. To accommodate size differences, for example, the invention rescales the images as appropriate.

Moreover, a customer 31 can annotate the local display or use additional data and/or application that can be kept private for a user or operator by desire during the communication session.

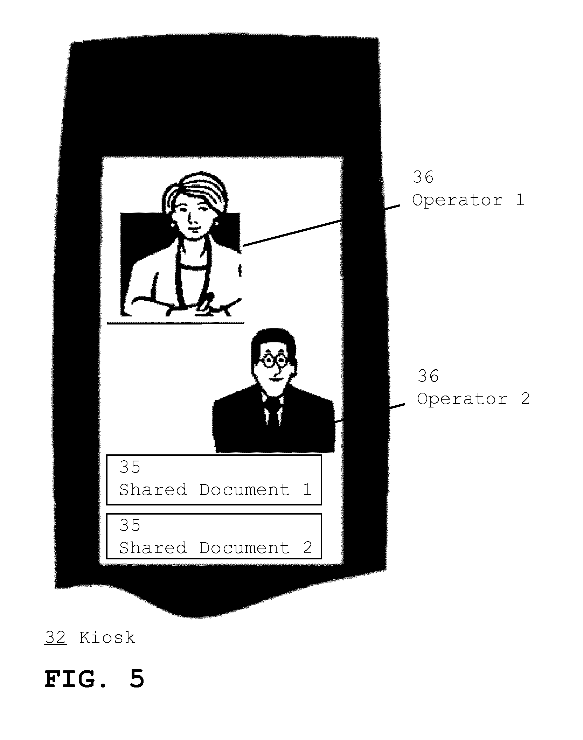

Moreover, the disclosed system can further provide a connection between different operators, such as an option to connect the customer to the second operator by the first operator. In such situation, the images of the first and a second operator are displayed on the kiosk's screen and the customer can perform teleconference with a few operators at the same time, optionally sharing the same documents between operators and the customer. FIG. 5 shows a view example of the interactive kiosk's 32 front panel touch screen (as explained in FIG. 1) with a plurality of optional shared documents 35 (as explained in FIG. 2) offered to the customer, where more than one operators 36 are involved into the teleconferencing, sharing (modifying) more than one documents 35 on their respective screens.

In yet another application, the standalone kiosk/video terminal 32 can play the role of a monitoring device with emergency response capability. It can play a role of the remote video terminal for real-time spot-of-interest monitoring, also capable of responding to customer emergency call or engaging an emergency response protocol in autonomous fashion.

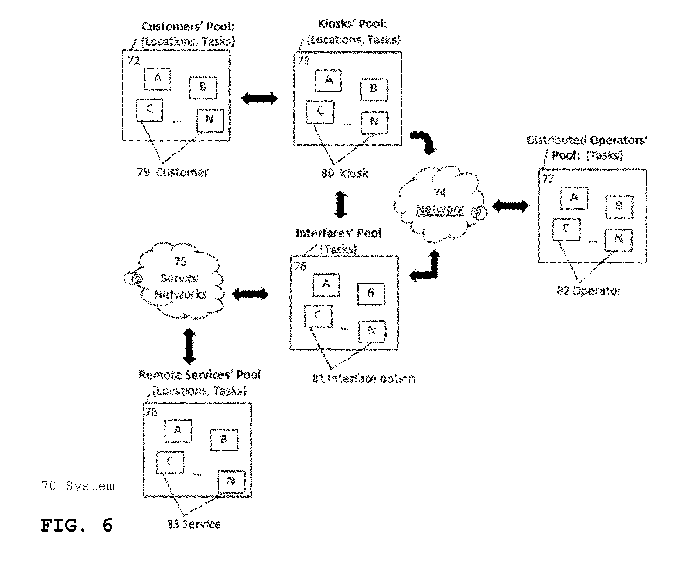

FIG. 6 provides a more general understanding of the interactive kiosk system based on the configurations explained in FIGS. 1 - 5. In general, the disclosed system is based on the plurality of kiosks and plurality of operators. With reference to FIG. 6, the system 70 (a multimedia networking system) includes one or more kiosks 80 (from the Kiosks' Pool 73) adapted to provide individual public customers 79 (Customers' Pool 72) based on their locations, with information and/or services provided by the unified interface options 81, (Interfaces' Pool) 76. As mentioned, kiosks 80 can be placed at any location.

The customer 79 can use a single kiosk 80 from the Kiosks' Pool 73 based on the location (proximity) of the customer 79 and the kiosk 80. In an embodiment of the invention, operator 82 from the Operators' Pool 77 can be automatically (or manually) chosen based on the combination of the Tasks preferred by the particular customer 79 from the Customers' Pool 72 and supported by the Interfaces' Pool 76.

An interactive videoconferencing capability is provided through the Kiosks' Pool 73 so that a chosen operator 82 (or combination of the operators from the Operators' Pool 77) can provide a virtual face-to-face assistance to a particular customer 79 from the Customers' Pool 32 through the particular kiosk 80 at the particular customer location.

In an embodiment of the invention, the interactive kiosk 80 from the Kiosks' Pool 73 provides a plurality of interface options 81 (from the Interfaces' Pool 76) being adapted to allow the particular customer 79 to perform a particular Tasks of choice (or combination of such Tasks) and interact with the chosen operator 82 in a real time.

In an embodiment of the invention, a plurality of (optionally third-party, remote) services 83, combined into a remote Services' Pool 78 can be provided by the kiosk 80 from the Kiosks' Pool 73, based on such kiosk location and the combination of Tasks chosen by the particular customer 79 connected to the kiosk 80 or by an operator(s) 82, communicating with this customer 79.

Examples of remote services 83 may include GPS (or similar), WiFi, Bluetooth (or similar) communication means as well as third-party services using networks 75, such as cellular telecommunication, ATM network, ticketing, database access, etc.

As mentioned, the standalone kiosk/ terminal 80 can be used as an information portal in any public place or commercial environment, where customer 79 can readily obtain all necessary information (video, audio, data) interactively. The customer 79 is also capable to exchange all information with the remote services using data entry functionality (camera, touch screen, smart card reader, scanner, etc.) of the terminal 80.

The ability to see and interact with different conference participants is essential to the conduct of any communication. Visual presence is one of the most important criteria a video conferencing system must satisfy. The disclosed invention provides the capability to compensate for the "parallax effect" during the customer-operator communication, if required. The parallax effect prevents the appearance of eye contact between the speaker and those remote viewers to whom he or she is speaking and results, generally, from the placement distance of the camera relative to the monitor and viewer. The parallax correction can be realized similar to US 5,500,671 or by alternative methods, enabling an eye contact and a sense of presence to the customer-operator communication.

The invention as a system and a method can combine multiple video-communication services and multi-media access for diverse customer appeal. The system and method employ a number of the disclosed standalone video terminals, communicating with the dedicated information portal, between each other, or providing a general multi-media access such as satellite TV, cable, broadcast TV, computer programs, internet access and gaming. It allows media uses and various management capabilities such s scheduling, accounting, security, training and the like.

Furthermore, the present invention provides a gaming platform where the standalone video terminal provides game-related video and sound generating electronics, and utilizing a vertically oriented video screen having touch video screen input as a player interface to the device, and optional pay-out mechanism. The standalone video terminals can be used as gaming devices, for example for playing gambling games such as roulette, poker, bingo, keno, lotto and various other games, and have historically been constructed in a slot machine format typically including a pay board wherein the winning pay-out combinations are displayed; a play section in which electronic or mechanical reels, card-playing indicia or other gaming objects are displayed.

The disclosed standalone video terminal can be adapted to conduct wireless telephone calls, using any known wireless phone system such as a Global System for Mobile Communications ("GSM") system, Code Division Multiple Access ("CDMA") system, Cellular Digital Packet Data ("CDPD") system and Time Division Multiple Access ("TDMA") system. Other wireless phone systems can include Bluetooth and the many forms of 802.11 wireless broadband, like 802.11a, 802.11b, 802.11g, etc. (cf. WLAN standards). Other embodiments include Voice over IP ("VoIP") type streaming data communications that can simulate circuit switched phone calls. Ear bud can be used to listen to phone calls and other sound messages and built in microphone can be used to speak into and input sound messages to device.

In one embodiment the invention the customers can be requested to verify their identity prior to the provision of the service. Preferably, the user verifies the identity by providing a biometric verification, such as a fingerprint, for example. The standalone video terminal can include a biometric system for assisting a customer in providing a biometric reading, such as a touch-screen application for capturing a fingerprint of the user; and feedback means for providing the user with an indication of a measurement has been captured. In an embodiment, the biometric identity verification can be realized similar to US 7,493,496, or by alternative methods.

Furthermore, the disclosed standalone video terminal can be connected to the institutional multi-frame computer (e.g. public organization, airport, college, etc.) for use by customers in connection with registration, payment of fees and similar tasks.

The disclosed device and the system may also include encryption and anonymized data transmission means for providing the anonymized version of the biometric data measured, for example.

The services that are provided through the interactive multimedia networking system (70) can be, for example, a governmental service in that the operator is employed by government. The same principle applies for non-governmental organizations as well. Providing services is convenient during non-opening hours of the organization. For example, the services can be provided during the hours when a Government office is closed.

The user interfaces at the interactive multimedia networking system (70) in general and of the kiosk in particular can implemented by a variety of extensions. For example, the kiosk 1, 32 can further comprises means for sending and receiving an electronic document to the customer via email or SMS. In such a scenario, the customer (who is the user of the kiosk) can process the documents with a separate computer (i.e., a notebook, or a smartphone).

Those of skill in the art can implement security measures. For example, the interactive multimedia networking system (70) or the kiosk (1, 32) can store data that is associated with a particular customer. Within the system, the data can be stored on a server that - in relation to the kiosk - is a remote server. In such cases the data is being protected by passwords or other access restriction to limit access to the customers and to prevent access by others.

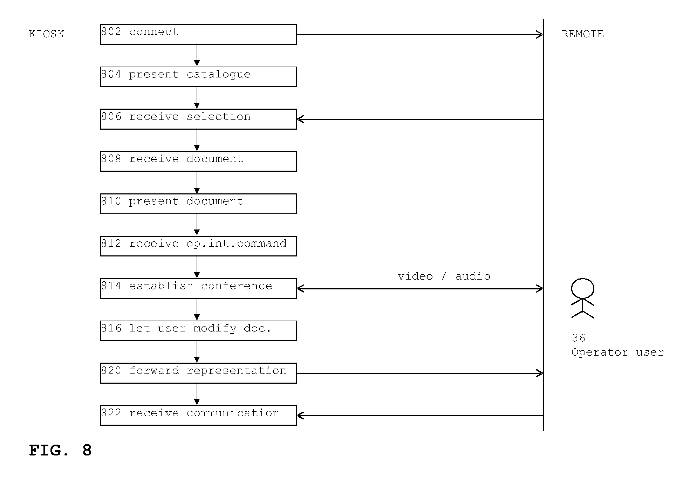

FIG. 8 illustrates a flow chart diagram of a method as well as a block diagram of modules for a computer program. The chart has vertical lines on the left side with activities performed at the kiosk (kiosk, user and symbolic screens), and on the right side with activities performed at remote computers.

In a connecting step 802, the kiosk is connected to a plurality of remote computers via a network. The connection could be permanent, so that the connection would have to be established only once.

In a presenting step 804, the kiosk presents a service catalog to a kiosk user 31, for example, as explained above to the customer. The service catalog is presented on a user interface of the kiosk (cf. camera, touch-screen, etc.). The service catalog has a number of N services (e.g., ticket reservation service, tax declaration service, and loan application service).

In a receiving step 806, the kiosk receives a selection of a particular service from the kiosk user 31 through the user interface of the kiosk. The particular service belongs to the number of N services. For example, the selection was received for the tax declaration service.

In a receiving step 808, the kiosk receives a document in relation to the particular service from a first remote computer through the network.

In a presenting step 810, the kiosk presents the document to the kiosk user 31 on the user interface of the kiosk. This is not limited to a single document, as explained above in connection with FIG. 5, there could be more documents.

In a receiving step 812, the kiosk receives an operator interaction command from the kiosk user 31. The command can be implemented in a variety of way, for example, by the above-explained "help" button on the user interface, or otherwise. In response to the command, the kiosk establishes 814 a video/audio conference with an operator of a second remote computer through the network (74, 75). The conference enables both users, the kiosk user (customer) and the operator user to see and hear each other. Thereby the kiosk uses hardware that is available in its user interface, such as camera and microphone. Other options are possible as well, for example, to use the interface of a mobile device (e.g., smartphone) that the kiosk user carries with him.

In an interacting step 816, the kiosk lets the kiosk user (31) modify the document. In the example of a tax declaration, modifying usually means to complete a form with figures.

In a forwarding step 820, the kiosk forwards a representation of the document (being modified) to the operator 36 of the second remote computer via the network (74, 75). The term "representation" should be understood in the sense that the operator can see the modifications that the kiosk user is editing. There are many options to convey that information, for example, to forward screen shots, to forward text strings, to use display sharing techniques etc.

Forwarding can be selective according to pre-defined rules (skill-set, real-time availability etc.), so that in the example, the representation of the tax declaration goes to a tax counselor who is available to answer questions.

In a receiving step 822, the kiosk receives verbal communication from the operator 36 (of the second remote computer) and forwarding the communication to the kiosk user 31 through the established video/audio conference. In other words, the established conference supports both users in their communication. In the example, the customer can complete the tax declaration with the help of the operator who is an expert.

Optionally, in a presenting step, the kiosk presents a list of operators for the selected service Si, and a further receiving step, the kiosk received a criterion to select the first operator from the kiosk user.

Optionally, the kiosk executes a payment step using the card/magnetic strip reader or using a device that accepts cash payment.

Optionally, the kiosk can exchange (send and receive) an electronic document with the user via email or SMS.

Optionally, the kiosk receives a signature of a document from the kiosk user who signs the document.

Optionally, in a connecting step, the kiosk establishes a WiFi (WLAN) connection to a personal device of the kiosk user and receives the selected service (or the selection of the service) from the personal device of the kiosk user.

Optionally, the number of services and documents can be increased. In such an embodiment, the kiosk receives a selection of a second particular service Sk from the kiosk user through the user interface of the kiosk. The second particular service Sk belongs to the number of N services. The kiosk receives a second document in relation to the second particular service Sk from a third remote computer through the network. The kiosk presents the second document in relation to the second particular service Sk to the kiosk user on the user interface of the kiosk. The kiosk receives an operator interaction command from the kiosk user and establishing a video/audio conference with a second operator of a fourth remote computer through the network. The kiosk interacts with the kiosk user to let the kiosk user modify the second document. The kiosk forwards a representation of the document being modified to the second operator of the fourth remote computer via the network. The kiosk receives a verbal communication from the second operator of the fourth remote computer and forwards the communication to the kiosk user through the established video/audio conference.

In a further embodiment, the kiosk receives a selection of a third particular service Sk from the kiosk user through the user interface of the kiosk. The second particular service Sk belongs to the number of N services. The kiosk receives a third document in relation to the third particular service Sk from a fifth remote computer through the network. The kiosk presents the third document in relation to the third particular service Sk to the kiosk user on the user interface. The kiosk receives an operator interaction command from the kiosk user and establishes a video/audio conference with the first operator of the second remote computer through the network. The kiosk interacts with the kiosk user to let the kiosk user modify the third document. The kiosk forwards a representation of the document being modified to the first operator via the network. The kiosk receives verbal communication from the first operator of the second remote computer and forwards the communication to the kiosk user through the established video/audio conference.

The kiosk can receive the selection of the second particular service Sk from the kiosk user with the help of the first operator and via the second computer interface.

Both the first and second operator's image can be displayed on the screen of the kiosk, and the kiosk can receive verbal communication from two operators at the same time. Such simultaneous communication can be presented to the kiosk user. Both the first and second operator can share a single document displayed on the screen.

FIG. 8 also illustrates a computer program or a computer program product. The computer program product - when loaded into a memory of a computer and being executed by at least one processor of the computer - performs the steps of the computer-implemented method. So in other words, the blocks in the figure stand for program modules and illustrate that the method can be implemented by a computer in kiosk under the control of the program.

Embodiments of the invention can be implemented in digital electronic circuitry, or in computer hardware, firmware, software, or in combinations of them. The invention can be implemented as a computer program product, for example, a computer program tangibly embodied in an information carrier, for example, in a machine-readable storage device, for execution by, or to control the operation of, data processing apparatus, for example, a programmable processor, a computer, or multiple computers. A computer program as claimed can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site or distributed across multiple sites and interconnected by a communication network. The described methods can all be executed by corresponding computer products on the respective devices, for example, the first and second computers, the trusted computers and the communication means.

Method steps of the invention can be performed by one or more programmable processors executing a computer program to perform functions of the invention by operating on input data and generating output. Method steps can also be performed by, and apparatus of the invention can be implemented as, special purpose logic circuitry, for example, a field programmable gate array (FPGA) or an application-specific integrated circuit (ASIC).

Processors suitable for the execution of a computer program include, by way of example, both general and special purpose microprocessors, and any one or more processors of any kind of digital computing device. Generally, a processor will receive instructions and data from a read-only memory or a random access memory or both. The elements of a computer are at least one processor for executing instructions and one or more memory devices for storing instructions and data. Generally, a computer will also include, or be operatively coupled to receive data from or transfer data to, or both, one or more mass storage devices for storing data, for example, magnetic, magneto-optical disks, optical disks or solid state disks. Such storage means may also provisioned on demand and be accessible through the Internet (e.g., Cloud Computing). Information carriers suitable for embodying computer program instructions and data include all forms of non-volatile memory, including by way of example semiconductor memory devices, for example, EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, for example, a cathode ray tube (CRT) or liquid crystal display (LCD) monitor, for displaying information to the user and an input device such as a keyboard, touchscreen or touchpad, a pointing device, for example, a mouse or a trackball, by which the user can provide input to the computer. Other kinds of devices can be used to provide for interaction with a user as well; for example, feedback provided to the user can be any form of sensory feedback, for example, visual feedback, auditory feedback, or tactile feedback; and input from the user can be received in any form, including acoustic, speech, or tactile input.

The invention can be implemented in a computing system that includes a back-end component, for example, as a data server, or that includes a middleware component, for example, an application server, or that includes a front-end component, for example, a client computer having a graphical user interface or a Web browser through which a user can interact with an implementation of the invention, or any combination of such back-end, middleware, or front-end components. Client computers can also be mobile devices, such as smartphones, tablet PCs or any other handheld or wearable computing device. The components of the system can be interconnected by any form or medium of digital data communication, for example, a communication network. Examples of communication networks include a local area network (LAN) and a wide area network (WAN), for example, the Internet or wireless LAN or telecommunication networks.

The computing system can include clients and servers. A client and a server are generally remote from each other and typically interact through a communication network. The relationship of client and server arises by virtue of computer programs running on the respective computers and having a client-server relationship to each other.

## Claims

1. An interactive multimedia networking system (70), comprising:
at least one kiosk (1, 32, 80) connected to a plurality of remotely located representatives/operators (36, 82) by a network (74); the plurality of operators (36, 82) consists of operators (36, 82) located in different remote places; the kiosk (1, 32, 80) providing a public customer with a catalog of information and services, the kiosk (1, 32, 80) having a kiosk's keyboard, a kiosk's touch screen (2), a kiosk's camera (6), a kiosk's microphone, a kiosk's credit card reader (7),
the screen (2) displaying the catalog of information and services available at the kiosk (1, 32, 80); the kiosk receiving a receiving a selection of a first service via the screen (2), the first service being service Si selected from 1...N services available from the catalog;
the screen (2) presenting a set of documents and a set of instructions appear on the display together with a help button/option; the set of documents and instructions being downloaded to the kiosk (1, 32, 80) using a network (74);
the screen (2) presenting a help option, that when activated by the customer (31, 79),
establishes a network connection between the kiosk (1, 32, 80) and a first operator's station;
the first operator's station communicating with a first operator from the plurality of operators (36, 82), a first operator's computer, an interface (34) allowing to control the customer's access to the kiosk (1, 32, 80), a first operator's camera, a first operator's microphone;
the first operator Rj being one of 1....j....M operators, performing the first service;
once the help option is activated, an image of the first operator transmitted from the first camera appears on the kiosk's screen (2);
the kiosk's camera (6) provides the first operator with an image of the customer (31);
the network provides a secure communication between the kiosk (1, 32, 80) and all operator's stations;
when the customer is completing documents required for the first selected service, the first operator is able to see a progress via the operator's interface; the first operator provides vocal instructions to the customer; the first operator completing the documents accordingly to customer's vocal instructions, said documents being shared on the kiosk's screen (2) and the operator's screen;
the customer (31, 79) selects a second service Sn selected from 1...N services, the customer activates a second help option from a second operator; the second operator specializing in the second service; the second operator located at a different place than the first operator; the second operator Ri being one of 1....i....K plurality of operators,
performing the second service;
a second set of documents and instructions is downloaded using the network; the second operator is helping the customer to complete the second set of documents using vocal instructions and a second shared document;
the system allowing the customer to complete a multitude of operations using a remote assistance from a multitude of the specialized operators.

2. The interactive multimedia networking system (70) of claim 1, further comprising a list of providers for selected products or services, and the customer uses a criterion to select the provider.

3. The interactive multimedia networking system (70) of claim 3, wherein the criterion is a cost.

4. The interactive multimedia networking system (70) of claim 3, wherein the criterion is a distance from a current customer's location.

5. The interactive multimedia networking system (70) of claim 1, wherein the kiosk (1, 32, 80) further comprises a payment option via a card/magnetic strip reader or cash.

6. The interactive multimedia networking system (70) of claim 1, wherein the kiosk (1, 32, 80) further comprises means for a document signing by the customer.

7. The interactive multimedia networking system (70) of claim 1, wherein the kiosk (1, 32, 80) further comprises a video identification, including a biometrical identification.

8. The interactive multimedia networking system (70) of claim 1, wherein the data is located at a remote server.

9. The interactive multimedia networking system (70) of claim 1, wherein the kiosk (1, 32, 80) further comprises an emergency response means to responding to an emergency call from a customer according to a predefine autonomous protocol.

10. The interactive multimedia networking system (70) of claim 1, further comprising an option to provide the second service via the first operator's station; the option to connect the customer to the second operator's station via the first operator's station.

11. The interactive multimedia networking system (70) of claim 11, wherein both the first and second operator's image are displayed on the kiosk's screen (2), and the customer performs teleconference with two operators at the same time.

12. The interactive multimedia networking system (70) of claim 12, wherein both the first and second operator share a document displayed on the screen.

13. A method (800) for operating a kiosk (1, 32, 80), comprising:
connecting (802) the kiosk to a plurality of remote computers via a network (74, 75);
presenting (804) a service catalog to a kiosk user (31) on a user interface of the kiosk, the service catalog having a number of N services;
receiving (806) a selection of a particular service (Si) from the kiosk user (31) through the user interface of the kiosk, the particular service (Si) belonging to the number of N services;
receiving (808) a first document in relation to the particular service (Si) from a first remote computer through the network (74, 75);
presenting (810) the first document to the kiosk user (31) on the user interface of the kiosk;
receiving (812) an operator interaction command from the kiosk user (31) and establishing (814) a video/audio conference with an operator (36) of a second remote computer through the network (74, 75);
interacting (816) with the kiosk user (31) to let the kiosk user (31) modify the document;
forwarding (820) a representation of the document being modified to the operator (36) of the second remote computer via the network (74, 75);
receiving (822) verbal communication from the operator (36) of the second remote computer and forwarding the communication to the kiosk user (31) through the established video/audio conference.

14. The method of claim 13, further comprising
receiving a selection of a second particular service Sk from the kiosk user (31) through the user interface of the kiosk, the second particular service Sk belonging to the number of N services;
receiving a second document in relation to the second particular service Sk from a third remote computer through the network (74, 75);
presenting the second document in relation to the second particular service Sk to the kiosk user (31) on the user interface of the kiosk;
receiving an operator interaction command from the kiosk user (31) and establishing a video/audio conference with a second operator of a fourth remote computer through the network (74, 75);
interacting with the kiosk user (31) to let the kiosk user (31) modify the second document;
forwarding a representation of the document being modified to the second operator of the fourth remote computer via the network (74, 75);
receiving verbal communication from the second operator of the fourth remote computer and forwarding the communication to the kiosk user (31) through the established video/audio conference.

15. The method of claim 14, further comprising:
receiving a selection of a third particular service Sk from the kiosk user (31) through the user interface of the kiosk, the second particular service Sk belonging to the number of N services;
receiving a third document in relation to the third particular service Sk from a fifth remote computer through the network (74, 75);
presenting the third document in relation to the third particular service Sk to the kiosk user on the user interface;
receiving an operator interaction command from the kiosk user and establishing a video/audio conference with the first operator of the second remote computer through the network (74, 75);
interacting with the kiosk user (31) to let the kiosk user (31) modify the third document;
forwarding a representation of the document being modified to the first operator the network (74, 75);
receiving verbal communication from the first operator of the second remote computer and forwarding the communication to the kiosk user (31) through the established video/audio conference.
